# DEMANDE DE BREVET EUROPEEN

(11) **EP 4 575 728 A1**
(43) Date de publication de la demande: **25.06.2025**
(21) Numéro de dépôt: 24221053.2
(22) Date de dépôt: 18.12.2024
(51) Int. Cl.: G06F 3/01, G06F 3/03

(54) **PROCEDE DE COMMANDE D'UN APPAREIL ELECTROMENAGER**

(30) Priorité: 21.12.2023 FR 2314759
(71) Demandeur: Groupe Brandt, 92500 Rueil-Malmaison (FR)
(72) Inventeur: RICHOU, Philippe, 45000 ORLEANS (FR); LORIDE, Antoine, 45000 ORLEANS (FR); BUGEIA, Jean-Marc, 45130 MEUNG SUR LOIRE (FR); VAUTRIN, Cédric, 45800 SAINT JEAN DE BRAYE (FR)
(74) Mandataire: Santarelli

(57) **Abrégé**

L'invention concerne un procédé (100) de commande d'un appareil électroménager (9) par le biais d'une interface homme-machine (90) adaptée à commander ledit appareil électroménager (9) en réponse à un geste effectué par au moins une main d'un utilisateur,
ledit procédé comprenant les étapes suivantes :
- détection (101) d'un geste effectué par ladite au moins une main, ledit geste étant composé d'au moins un mouvement effectué en au moins un temps donné ;
- si ledit geste détecté est effectué dans une zone de détection prédéfinie (8) située à distance de ladite interface homme-machine (90), comparaison (102) dudit geste détecté avec un ensemble de séquences prédéterminées, chacune desdites séquences prédéterminées comprenant au moins un mouvement prédéterminé à réaliser dans un laps de temps prédéterminé, chacune desdites séquences prédéterminées correspondant respectivement à une instruction de commande dudit appareil électroménager (9) ; et
- si ledit geste détecté correspond à une desdites séquences prédéterminées, délivrance (103) d'une instruction de commande dudit appareil électroménager correspondant respectivement à ladite séquence prédéterminée.

## Description

### Domaine de l'invention

La présente invention se rapporte au domaine des appareils électroménagers, et plus particulièrement des appareils électroménagers domestiques.

L'invention concerne plus particulièrement un procédé de commande d'un tel appareil électroménager par le biais d'une interface homme-machine adaptée à commander ledit appareil électroménager en réponse à un geste effectué par au moins une main d'un utilisateur.

### Etat de la technique antérieure

Les appareils électroménagers domestiques, comme les plaques de cuisson, les fours de cuisson domestiques, les lave-linges ou encore les lave-vaisselles, etc. présentent généralement un carter principal logeant des composants permettant à l'appareil électroménager de remplir sa fonction, et une interface homme-machine qui peut être disposée dans un plan parallèle à la face frontale de l'appareil électroménager, c'est-à-dire dans un plan parallèle à la face frontale du carter.

Cette interface homme-machine peut, de manière connue, être commandée avec ou sans contact de la part d'un utilisateur. En d'autres termes, un utilisateur peut commander une interface homme-machine en appuyant sur des boutons prévus à cet effet tels que des boutons définis sur un écran tactile, ou peut effectuer un geste à distance qui sera détecté par l'interface homme-machine.

Par exemple, le document CH700524 décrit un appareil électroménager domestique comprenant une unité d'entrée sans contact conçue pour distinguer les différentes trajectoires d'une main d'utilisateur et pour générer différents signaux en fonction des trajectoires.

Ainsi, avec de telles solutions, un utilisateur peut commander son appareil électroménager domestique sans pour autant avoir besoin de toucher cet appareil électroménager domestique.

Toutefois, un inconvénient de telles solutions est que l'unité d'entrée sans contact peut être amenée à détecter des trajectoires d'une main d'utilisateur qui correspondraient à du bruit provenant par exemple d'une personne passant à proximité et effectuant un mouvement sans pour autant vouloir commander l'appareil électroménager domestique, ou un enfant qui ferait des gestes devant l'unité d'entrée sans contact.

En outre, il peut s'avérer complexe de commander un tel appareil électroménager domestique du fait que la comparaison d'une trajectoire réalisée par la main d'un utilisateur par rapport à une trajectoire engendrant un signal peut s'avérer difficile si la trajectoire réalisée n'est pas précise ou que des trajectoires relativement proches sont programmées pour engendrer des signaux différents.

Il existe donc un besoin de fournir une solution permettant d'optimiser la commande de tels appareils électroménagers domestiques, et notamment de simplifier la commande à distance, ou sans contact, de tels appareils électroménagers domestiques.

### Exposé de l'invention

L'invention a pour but de remédier au moins en partie aux inconvénients mentionnés ci-dessus relatifs aux techniques de l'art antérieur.

Pour ce faire, l'invention concerne un procédé de commande d'un appareil électroménager par le biais d'une interface homme-machine adaptée à commander ledit appareil électroménager en réponse à un geste effectué par au moins une main d'un utilisateur,
ledit procédé comprenant les étapes suivantes :
   - détection d'un geste effectué par ladite au moins une main, ledit geste étant composé d'au moins un mouvement effectué en au moins un temps donné ;
   - si ledit geste détecté est effectué dans une zone de détection prédéfinie située à distance de ladite interface homme-machine, comparaison dudit geste détecté avec un ensemble de séquences prédéterminées, chacune desdites séquences prédéterminées comprenant au moins un mouvement prédéterminé à réaliser dans un laps de temps prédéterminé, chacune desdites séquences prédéterminées correspondant respectivement à une instruction de commande dudit appareil électroménager ; et
   - si ledit geste détecté correspond à une desdites séquences prédéterminées, délivrance d'une instruction de commande dudit appareil électroménager correspondant respectivement à ladite séquence prédéterminée,
ladite zone de détection prédéfinie présentant une forme pyramidale s'étendant entre un sommet porté par ladite interface homme-machine et une base située à une distance normale audit sommet comprise entre 30 et 70 cm, préférentiellement 50 cm, ladite base s'étendant sur une longueur comprise entre 20cm et 40cm, préférentiellement 30cm, ladite base s'étendant sur une largueur comprise entre 20cm et 40cm, préférentiellement 30cm, ladite base étant centrée sur une normale à la interface homme machine.

Ainsi, la solution propose une approche nouvelle et invention permettant de résoudre au moins en partie certains des inconvénients de l'art antérieur.

Notamment, du fait que le geste effectué par la au moins une main de l'utilisateur présente une composante spatiale, à savoir le au moins un mouvement effectué, et une composante temporelle, à savoir le au moins un temps donné pour effectuer le au moins mouvement, la détection d'un geste et la comparaison de ce geste avec un ensemble de séquences prédéterminées s'avère plus précise, de même que la délivrance de la bonne instruction de commande souhaitée par l'utilisateur.

En outre, une telle mise en oeuvre permet de limiter la détection de gestes provenant d'une main d'utilisateur qui correspondraient à du bruit provenant par exemple d'une personne passant à proximité ou d'un enfant.

Les dimensions de la zone de détection présentent également l'avantage de limiter la détection de gestes provenant d'une main d'utilisateur qui correspondraient à du bruit provenant par exemple d'une personne passant à proximité, d'un enfant, ou d'une personne qui exécuterait des opérations, par exemple de cuisine pour une table de cuisson ou de tri de linge pour un lave-linge, et qui ferait donc de nombreux gestes sans pour autant avoir le souhait que ces gestes soient pris en compte par l'interface homme-machine.

Selon un aspect particulier d'au moins un mode de réalisation de l'invention, si ledit geste détecté comprend :
- une première partie de geste détecté dans laquelle le mouvement consiste en un rapprochement vers ladite interface homme-machine depuis une distance normale à ladite interface homme-machine supérieure à 200mm jusqu'à une distance normale à ladite interface homme-machine comprise entre 8mm et 200mm, puis
- une deuxième partie de geste détecté dans laquelle le mouvement consiste en un écartement de ladite interface homme-machine jusqu'à une distance normale à ladite interface homme-machine maximale inférieure 200mm en un temps compris entre 50ms et 750ms, puis
- une troisième partie de geste détecté dans laquelle ledit mouvement consiste en un rapprochement vers ladite interface homme-machine jusqu'à une distance normale à ladite interface homme-machine minimale supérieure à 8mm en un temps compris entre 50ms et 750ms, puis
- une quatrième partie de geste détecté dans laquelle le mouvement consiste en un écartement de ladite interface homme-machine d'une distance normale à ladite interface homme-machine depuis une distance comprise entre 8mm et 200mm jusqu'à une distance normale à ladite interface homme-machine supérieure à 200mm,
alors ladite instruction de commande correspond à une sélection et/ou une activation et/ou une demande de réglage.

Selon un aspect particulier d'au moins un mode de réalisation de l'invention, si ledit geste détecté comprend :
- une première partie de rapprochement vers l'interface homme-machine jusqu'à une position basse située dans la zone de détection prédéfinie ;
- une deuxième partie d'écartement de l'interface homme-machine jusqu'à une position haute, sans sortir de la zone de détection prédéfinie, d'une distance par rapport à cette position basse et normale à l'interface homme-machine comprise entre 8mm et 200mm en un temps compris entre 50ms et 750ms ;

- une troisième partie de rapprochement vers l'interface homme-machine depuis la position haute, d'une distance par rapport à cette position haute et normale à l'interface homme-machine comprise entre 8mm et 200mm en un temps compris entre 50ms et 750ms ;
- une quatrième partie d'écartement de l'interface homme-machine,
alors ladite instruction de commande correspond à une sélection et/ou une activation et/ou une demande de réglage.

Selon un aspect particulier d'au moins un mode de réalisation de l'invention, si le geste détecté comprend un mouvement continu consistant en un déplacement continu depuis un niveau haut situé à une distance normale de 350mm par rapport à l'interface homme-machine jusqu'à un niveau bas situé à 150mm de l'interface homme-machine, et ce en un temps inférieur à 400ms, alors ladite instruction de commande correspond à une fonction d'urgence dudit appareil électroménager.

Selon un aspect particulier d'au moins un mode de réalisation de l'invention, si ledit geste détecté comprend :
- une première partie de geste détecté dans laquelle le mouvement consiste en un rapprochement vers ladite interface homme-machine depuis une distance normale à ladite interface homme-machine supérieure à 350mm jusqu'à une distance normale à ladite interface homme-machine inférieure à 350mm, et ce en un temps inférieur à 500ms, puis
- une deuxième partie de geste dans laquelle le mouvement consiste en un rapprochement continu vers ladite interface homme-machine jusqu'à une distance normale à ladite interface homme-machine inférieure ou égale à 150mm, et ce en un temps inférieur à 400ms,
alors ladite instruction de commande correspond à une fonction d'urgence dudit appareil électroménager.

Il est à noter que, de manière préférentielle, le décompte dudit temps pour la première partie de geste détecté s'amorce lorsque ladite main dudit utilisateur pénètre dans ladite zone de détection prédéfinie, du fait que si la main dudit utilisateur n'est pas dans la zone de détection prédéfinie, le geste n'est pas détecté et n'est donc pas pris en compte.

De ce fait, selon un aspect particulier d'au moins un mode de réalisation de l'invention, si le geste détecté comprend :
- une première partie de geste détecté dans laquelle le mouvement consiste en un rapprochement vers ladite interface homme-machine depuis une distance normale à ladite interface homme-machine supérieure à 350mm jusqu'à une distance normale à ladite interface homme-machine inférieure à 350mm, et ce en un temps inférieur à 500ms, le décompte dudit temps s'amorçant lorsque ladite main dudit utilisateur pénètre dans ladite zone de détection prédéfinie, puis
- une deuxième partie de geste dans laquelle le mouvement consiste en un rapprochement continu vers ladite interface homme-machine jusqu'à une distance normale à ladite interface homme-machine inférieure ou égale à 150mm, et ce en un temps inférieur à 400ms,
alors ladite instruction de commande correspond à une fonction d'urgence dudit appareil électroménager.

Il est à noter que le mouvement peut également compter un écartement de la main de l'interface homme-machine dans la première partie de geste.

Selon un aspect particulier d'au moins un mode de réalisation de l'invention, si ledit geste détecté comprend une première partie de geste détecté dans laquelle ladite au moins une main d'un utilisateur est immobile pendant une durée sensiblement égale à 500ms et est situé à une distance normale à ladite interface homme-machine comprise entre 150mm et 350mm, ladite instruction de commande correspond au déclenchement du réglage d'un paramètre. En outre, suite à la délivrance de ladite instruction de commande correspondant au réglage d'un paramètre, si ledit geste détecté comprend une deuxième partie de geste détecté consistant en un rapprochement vers ladite interface homme-machine jusqu'à une distance normale à ladite interface homme-machine comprise entre 150mm et 350mm ou un écartement de ladite interface homme-machine jusqu'à une distance normale à ladite interface homme-machine comprise entre 150mm et 350mm, ladite instruction de commande correspond à un choix de niveau de réglage dudit paramètre. En outre, suite à la délivrance de ladite instruction de commande correspondant à un choix de niveau de réglage dudit paramètre, si ledit geste détecté comprend une troisième partie de geste détecté dans laquelle ladite au moins une main d'un utilisateur se rapproche ou s'écarte de ladite interface homme-machine d'une distance normale à ladite interface homme-machine qui est inférieure ou égale à 5mm en un temps sensiblement égal à 500ms, ladite instruction de commande correspond à une fin de réglage du paramètre.

Selon une variante, suite à la délivrance de ladite instruction de commande correspondant à un choix de niveau de réglage dudit paramètre, si ladite main dudit utilisateur s'est rapprochée vers ladite interface homme-machine ou s'est écartée de ladite interface homme-machine d'une distance normale à ladite interface homme-machine supérieure ou égale à 15mm durant ladite deuxième partie de geste détecté, et si ledit geste détecté comprend une troisième partie de geste détecté dans laquelle ladite au moins une main d'un utilisateur se rapproche ou s'écarte de ladite interface homme-machine d'une distance normale à ladite interface homme-machine qui est inférieure ou égale à 5mm en un temps sensiblement égal à 500ms, ladite instruction de commande correspond à une fin de réglage du paramètre.

Selon un aspect particulier d'au moins un mode de réalisation de l'invention, le déclenchement du réglage d'un paramètre peut comprendre une étape d'émission d'un signal sonore et/ou lumineux.

Selon un aspect particulier d'au moins un mode de réalisation de l'invention, cette étape d'émission d'un signal sonore et/ou lumineux peut être réalisée par des moyens d'émission de signal.

Selon un aspect particulier d'au moins un mode de réalisation de l'invention, le paramètre appartient au groupe comprenant :
- une puissance de chauffage ;
- un mode de cuisson ;
- une sélection d'un foyer de cuisson ;
- un temps de cuisson ;
- un programme de lavage ;
- un programme de séchage ;
- un programme de maintenance ; et
- un réglage de paramètre d'information système.

L'invention concerne également une interface homme-machine destinée à mettre en oeuvre un procédé de commande d'un appareil électroménager selon l'un des modes de réalisation précités, adaptée à commander ledit appareil électroménager en réponse à un geste effectué par au moins une main d'un utilisateur, ladite interface homme-machine comprenant :
- un module d'acquisition muni d'un capteur de temps de vol et d'un microprocesseur,
- un module de commande configuré pour délivrer ladite instruction de commande dudit appareil électroménager,
- un module de stockage de séquences prédéterminées.

Selon différents modes de réalisation, le capteur temps de vol (ou ToF en anglais pour Time of Flight) peut par exemple comprendre une caméra temps de vol, un système Radar, c'est-à-dire un système de détection par détection par ondes, ou un système Lidar, c'est-à-dire un système de détection par laser.

Selon un aspect particulier d'au moins un mode de réalisation de l'invention, l'interface homme-machine comprend un dispositif d'affichage et/ou de saisie pour un utilisateur.

L'invention concerne un appareil électroménager comprenant une interface homme-machine selon l'un des modes de réalisation précités.

Selon un aspect particulier d'au moins un mode de réalisation de l'invention, ledit appareil ménager appartenant au groupe comprenant :
- une table de cuisson ;
- un four ;
- un lave-linge ;
- un lave-vaisselle ;
- une hotte.

### Présentation des figures

L'invention, ainsi que les différents avantages qu'elle présente, seront plus facilement compris à la lumière de la description qui va suivre d'un mode de réalisation illustratif et non limitatif de celle-ci, et des dessins annexés parmi lesquels :
[Fig. 1] est une vue schématique d'une interface homme-machine selon un mode de réalisation de l'invention ;
[Fig. 2] est une vue schématique d'une zone de détection selon un mode de réalisation de l'invention ; [Fig. 3] est une vue schématique d'un procédé de commande selon un mode de réalisation de l'invention ;
[Fig. 4] est une représentation schématique d'un geste à détecter pour délivrer une instruction de commande correspondant à une sélection et/ou une activation et/ou une demande de réglage selon un mode de réalisation de l'invention ;
[Fig. 5] est une représentation schématique d'un geste à détecter pour délivrer une instruction de commande correspondant à une fonction d'urgence dudit appareil électroménager selon un mode de réalisation de l'invention, et
[Fig. 6] est une représentation schématique d'un geste à détecter pour délivrer une instruction de commande correspondant à un réglage d'un paramètre dudit appareil électroménager selon un mode de réalisation de l'invention.

### Description détaillée d'un mode de réalisation de l'invention

Les éléments identiques représentés sur les figures précitées sont identifiés par des références numériques identiques.

L'invention concerne un procédé 100 de commande d'un appareil électroménager 9.

Cet appareil électroménager, ou appareil électroménager domestique, peut notamment appartenir au groupe comprenant :
- une table de cuisson ;
- un four ;
- un lave-linge ;
- un lave-vaisselle ;
- une hotte.

Le procédé 100 de commande d'un appareil électroménager se fait donc par le biais d'une interface homme-machine 90 adaptée à commander cet appareil électroménager 9 en réponse à un geste effectué par au moins une main d'un utilisateur.

Cette commande de l'appareil électroménager se fait sans contact entre l'utilisateur et l'interface homme-machine 90.

En d'autres termes, cette commande de l'appareil électroménager se fait à distance, c'est-à-dire avec une distance non nulle entre la main d'un utilisateur et l'interface homme-machine 90.

Il est à noter que selon des variantes de réalisation, l'appareil électroménager peut toutefois conserver une partie des contrôles activables par contact de l'utilisateur avec des moyens de commandes ménagés sur l'interface homme-machine.

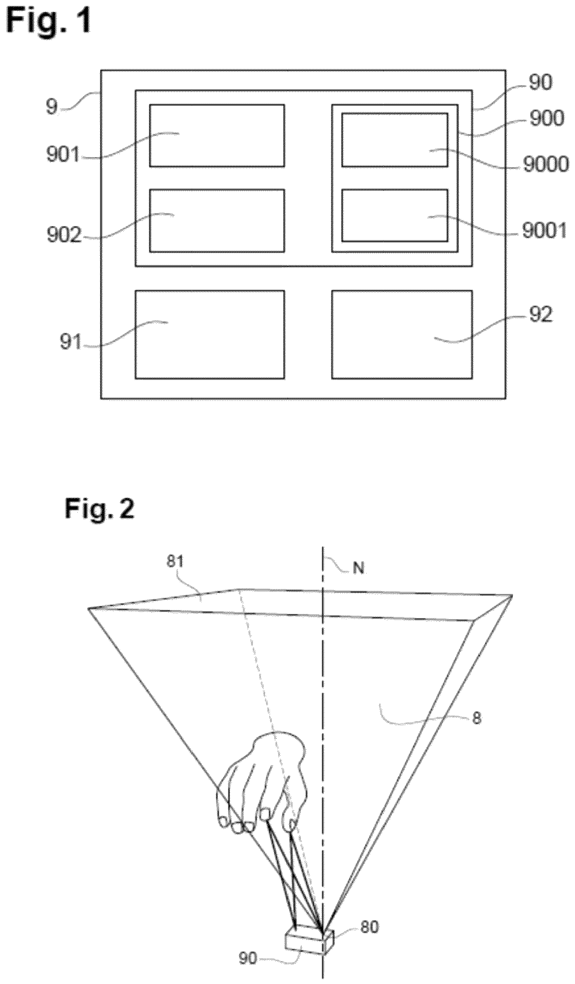

Une telle interface homme machine 90 peut comprendre, comme illustré en figure 1, un module d'acquisition 900, un module de commande 901, et un module de stockage 902.

Le module d'acquisition peut notamment être utilisé pour mettre en oeuvre l'étape de détection 101 d'un geste effectué par la au moins une main et l'étape de comparaison 102 du geste détecté avec un ensemble de séquences prédéterminées. Il comprend, dans le mode de réalisation illustré, un capteur temps de vol 9000 et un microprocesseur 9001.

Le capteur temps de vol (ou ToF en anglais pour Time of Flight) peut par exemple comprendre une caméra temps de vol, un système Radar, c'est-à-dire par détection par ondes, ou un système Lidar, c'est-à-dire détection par laser.

Le module de commande 901 est ici configuré pour délivrer l'instruction de commande de l'appareil électroménager.

Quant au module de stockage 902, il est ici configuré pour stocker les différentes séquences prédéterminées qui seront comparées avec le geste détecté par le module d'acquisition.

Comme illustré en figure 1, l'interface homme-machine 90 comprend en outre un dispositif d'affichage et/ou de saisie 92 pour un utilisateur, de sorte à pouvoir communiquer avec l'utilisateur.

Cette interface homme-machine 90 est adaptée à commander l'appareil électroménager au moyen d'un procédé 100 de commande d'un appareil électroménager 9 en réponse à un geste effectué par au moins une main d'un utilisateur.

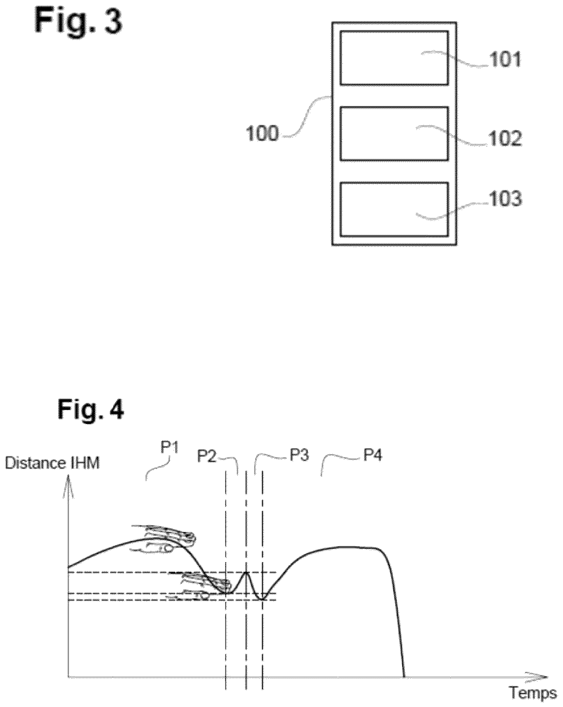

Ce procédé, comme illustré en figure 3, comprend les étapes suivantes :
- détection 101 d'un geste effectué par la au moins une main, le geste étant composé d'au moins un mouvement effectué en au moins un temps donné ;
- si le geste détecté est effectué dans une zone de détection prédéfinie 8 située à distance de l'interface homme-machine 90, comparaison 102 du geste détecté avec un ensemble de séquences prédéterminées, chacune des séquences prédéterminées comprenant au moins un mouvement prédéterminé à réaliser dans un laps de temps prédéterminé, chacune des séquences prédéterminées correspondant respectivement à une instruction de commande de l'appareil électroménager 9 ; et
- si le geste détecté correspond à une des séquences prédéterminées, délivrance 103 d'une instruction de commande correspondant respectivement à la séquence prédéterminée.

Comme précisé à l'étape de détection, le geste effectué par la au moins une main est composé d'au moins un mouvement effectué en au moins un temps donné.

En d'autres termes, le geste effectué par la au moins une main présente une composante spatiale qui peut être bidimensionnelle ou tridimensionnelle, à savoir le mouvement, et une composante spatiale, à savoir le temps donné.

Les deux composantes du geste effectué par la au moins une main ont une importance dans le déroulement du procédé du fait que les séquences prédéterminées comprennent au moins un mouvement prédéterminé à réaliser dans un laps de temps prédéterminé.

Ainsi, pour au moins certaines des parties du geste détecté, le mouvement effectué par la main sera comparé au mouvement prédéterminé à réaliser des séquences prédéterminées et le temps donné pour effectuer ce mouvement sera comparé au laps de temps prédéterminé pour réaliser ce mouvement prédéterminé.

Dans le mode de réalisation présenté, et comme visible en figure 2, la zone de détection prédéfinie 8 présente ici une forme pyramidale s'étendant entre un sommet 80 porté par l'interface homme-machine 90 et une base 81 située à une distance normale au sommet 80 comprise entre 30 et 70 cm, préférentiellement 50 cm, la base 81 s'étendant sur une longueur comprise entre 20cm et 40cm, préférentiellement 30cm, la base 81 s'étendant sur une largueur comprise entre 20cm et 40cm, préférentiellement 30cm, la base 81 étant centrée sur la normale N à l'interface homme machine 90.

De telles dimensions de la zone de détection présentent l'avantage de limiter la détection de gestes provenant d'une main d'utilisateur qui correspondraient à du bruit provenant par exemple d'une personne passant à proximité, d'un enfant, ou d'une personne qui exécuterait des opérations.

Par exemple, dans le cas d'une table de cuisson, un utilisateur doit régulièrement effectuer des gestes pour cuisiner. Dans le cas d'un four, l'ouverture ou la fermeture de la porte ainsi que le fait de déplacer une grille de four pourraient être autant de gestes qui pourraient générer du bruit. Dans le cas d'un lave-linge, le fait de trier le linge à mettre ou l'ouverture et la fermeture du hublot pourraient également être des gestes qui pourraient générer du bruit.

Dans d'autres modes de réalisation, on pourrait prévoir une zone de détection prédéfinie présentant une autre forme, tel qu'une forme cylindrique, une forme rectangulaire.

On pourrait également prévoir une zone de détection multiple, avec une interface homme-machine présentant plusieurs capteurs temps de vol.

On pourrait également prévoir un mode de réalisation dans lequel le procédé de commande pourrait prévoir une étape préliminaire d'initialisation.

On pourrait également prévoir un mode de réalisation dans lequel le procédé de commande pourrait prévoir une étape d'authentification de l'utilisateur de sorte à limiter des utilisations non souhaitées, telle que par un enfant.

On présente maintenant, en relation avec la figure 4, un mode de réalisation d'un geste à détecter pour délivrer une instruction de commande correspondant à une sélection et/ou une activation et/ou une demande de réglage selon un mode de réalisation de l'invention.Comme illustré schématiquement sur cette figure 4, l'instruction de commande correspond à une sélection et/ou une activation et/ou une demande de réglage si le geste détecté comprend quatre parties se présentant comme suit :
- une première partie P1 de geste détecté dans laquelle le mouvement consiste en un rapprochement vers l'interface homme-machine 90 depuis une distance normale à l'interface homme-machine 90 supérieure à 200mm jusqu'à une distance normale à l'interface homme-machine 90 comprise entre 8mm et 200mm, puis
- une deuxième partie P2 de geste détecté dans laquelle le mouvement consiste en un écartement de l'interface homme-machine 90 jusqu'à une distance normale à l'interface homme-machine 90 maximale inférieure à 200mm en un temps compris entre 50ms et 750ms, puis
- une troisième partie P3 de geste détecté dans laquelle le mouvement consiste en un rapprochement vers l'interface homme-machine 90 jusqu'à une distance normale à l'interface homme-machine 90 minimale supérieure à 8mm en un temps compris entre 50ms et 750ms, puis
- une quatrième partie P4 de geste détecté dans laquelle le mouvement consiste en un écartement de l'interface homme-machine 90 d'une distance normale à l'interface homme-machine 90 depuis une distance comprise entre 8mm et 200mm jusqu'à une distance normale à l'interface homme-machine 90 supérieure à 200mm.

En d'autres termes, l'instruction de commande correspond à une sélection et/ou une activation et/ou une demande de réglage si le geste comprend un rapprochement jusqu'à une distance prédéterminée de l'interface homme-machine, puis un écartement de l'interface homme-machine d'une distance prédéterminée dans un laps de temps prédéterminé, puis un rapprochement de l'interface homme-machine d'une distance prédéterminée dans un laps de temps prédéterminé, pour se finir par un écartement jusqu'à une distance prédéterminée de l'interface homme-machine.

En d'autres termes encore, le geste à réaliser pour que l'instruction de commande corresponde à une sélection et/ou une activation et/ou une demande de réglage est un double rapprochement de la main par rapport à l'interface homme-machine, chacun suivi par un écartement, dans un temps prédéterminé et relativement court.

Cela permet d'avoir un geste simple à retenir et à exécuter, mais qui est toutefois différenciant par rapport aux gestes habituels d'utilisation d'un appareil électroménager.

Selon une alternative, le geste à effectuer par l'utilisateur pour que l'instruction de commande corresponde à une sélection et/ou une activation et/ou une demande de réglage implique :
- une première partie de rapprochement vers l'interface homme-machine jusqu'à une position basse située dans la zone de détection prédéfinie ;
- une deuxième partie d'écartement de l'interface homme-machine jusqu'à une position haute, sans sortir de la zone de détection prédéfinie, d'une distance par rapport à cette position basse et normale à l'interface homme-machine comprise entre 8mm et 200mm en un temps compris entre 50ms et 750ms ;
- une troisième partie de rapprochement vers l'interface homme-machine depuis la position haute, d'une distance par rapport à cette position haute et normale à l'interface homme-machine comprise entre 8mm et 200mm en un temps compris entre 50ms et 750ms ;
- une quatrième partie d'écartement de l'interface homme-machine.

La sélection et/ou activation et/ou demande de réglage peut par exemple être la sélection d'un foyer de cuisson pour une table de cuisson, la sélection d'un programme de lavage pour un lave-linge, l'activation du foyer de cuisson ou du lave-linge. Cela peut également être une demande de réglage afin de choisir un réglage qui sera à régler.

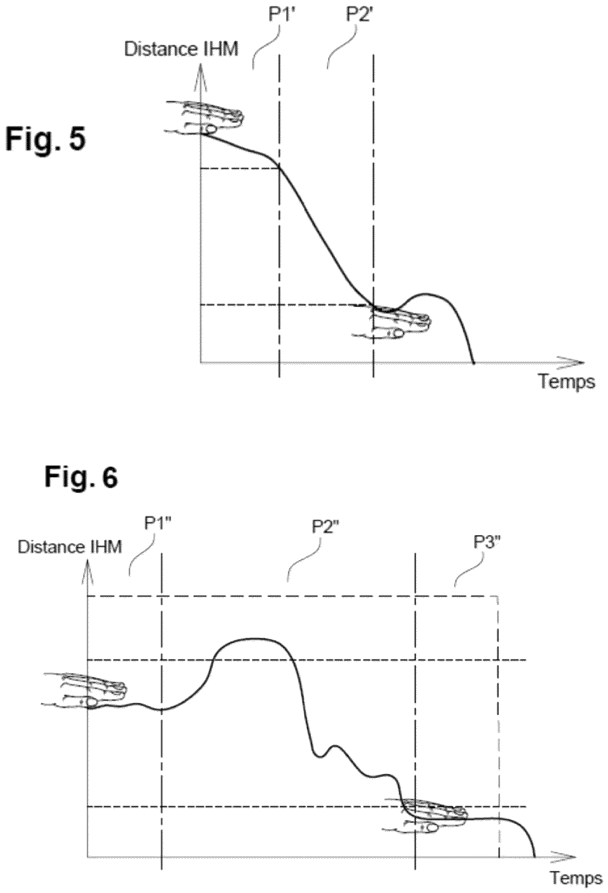

On présente maintenant, en relation avec la figure 5, un mode de réalisation d'un geste à détecter pour délivrer une instruction de commande correspondant à une fonction d'urgence selon un mode de réalisation de l'invention.

Comme décrit ci-dessous, le geste à effectuer par l'utilisateur pour que l'instruction de commande corresponde à une fonction d'urgence implique un mouvement continu consistant en un déplacement continu depuis un niveau haut situé à une distance normale de 350mm par rapport à l'interface homme-machine 90 jusqu'à un niveau bas situé à 150mm de l'interface homme-machine 90, et ce en un temps inférieur à 400ms, soit un geste de rapprochement continu vers l'interface homme-machine 90 avec une amplitude normale de 200mm par rapport à l'interface homme-machine 90 et ce en un temps inférieur à 400ms.

Plus particulièrement, dans ce mode de réalisation, et comme illustré schématiquement sur cette figure 5, l'instruction de commande correspond à une fonction d'urgence si le geste détecté comprend deux parties se présentant comme suit :
- une première partie P1' de geste détecté dans laquelle le mouvement consiste en un rapprochement vers l'interface homme-machine 90 depuis une distance normale à l'interface homme-machine 90 supérieure à 350mm jusqu'à une distance normale à l'interface homme-machine 90 inférieure à 350mm, et ce en un temps inférieur à 500ms, puis
- une deuxième partie P2' de geste dans laquelle le mouvement consiste en un rapprochement continu vers l'interface homme-machine 90 jusqu'à une distance normale à l'interface homme-machine 90 inférieure ou égale à 150mm, et ce en un temps inférieur à 400ms.

En d'autres termes, l'instruction de commande correspond à une fonction d'urgence si le geste comprend un rapprochement jusqu'à une distance prédéterminée de l'interface homme-machine dans un laps de temps prédéterminé, c'est-à-dire un franchissement d'un plan correspondant à une distance normale prédéterminée à l'interface homme-machine dans un laps de temps prédéterminé, puis un rapprochement continu, depuis cette distance normale prédéterminée, vers l'interface homme-machine d'une distance prédéterminée à parcourir dans un autre laps de temps prédéterminé.

Le laps de temps prédéterminé pour le rapprochement jusqu'à une distance prédéterminée de l'interface homme-machine est pris en compte à partir du moment où la main de l'utilisateur pénètre dans la zone de détection prédéfinie, c'est-à-dire lorsque la main de l'utilisateur franchit la distance normale prédéterminée par rapport à l'interface homme-machine.

La fonction d'urgence peut par exemple être un arrêt d'urgence de l'appareil électroménager.

Une telle caractéristique permet d'avoir un geste à effectuer qui se différencie assez nettement d'autres gestes prédéterminés de par l'amplitude de mouvement entre le niveau haut et le niveau bas, ce qui est en corrélation avec un caractère d'urgence, et présente donc l'avantage d'être facile à mémoriser pour un utilisateur.

Il est à noter que le mouvement peut également compter un écartement de la main de l'interface homme-machine dans la première partie de geste.

Selon différents modes de réalisation, un tel geste peut être détectable à tout moment par l'interface homme-machine, ce afin de stopper l'appareil électroménager à tout moment.

On présente maintenant, en relation avec la figure 6, un mode de réalisation d'un geste à détecter pour délivrer une instruction de commande correspondant à un réglage de paramètre selon un mode de réalisation de l'invention.

Comme illustré schématiquement sur cette figure 6, le réglage d'un paramètre se déroule en plusieurs phases, à savoir une phase de déclenchement du réglage d'un paramètre donnant lieu à la délivrance d'une instruction de commande correspondant au déclenchement du réglage d'un paramètre, une phase de réglage du niveau du paramètre donnant lieu à la délivrance d'une instruction de commande correspondant au choix de niveau de réglage du paramètre, et une phase de fin de réglage du paramètre correspondant à la délivrance d'une instruction de commande correspondant à une fin de réglage du paramètre.

Dans ce mode de réalisation, le dispositif d'affichage et/ou de saisie 92 pour un utilisateur permet également de visualiser le réglage du paramètre, par exemple en réalisant un affichage de passage en mode réglage, et/ou en réalisant un affichage du changement de valeur lors du réglage du paramètre, et/ou en réalisant un affichage de la validation d'une valeur finale de réglage du paramètre à la fin du réglage du paramètre.

L'instruction de commande correspond à un déclenchement du réglage d'un paramètre si le geste détecté comprend une première partie P1" de geste détecté dans laquelle la au moins une main d'un utilisateur est immobile pendant une durée sensiblement égale à 500ms et est situé à une distance normale à l'interface homme-machine 90 comprise entre 150mm et 350mm.

Selon un mode de réalisation, le déclenchement du réglage d'un paramètre, et donc la délivrance de l'instruction de commande correspondant à un déclenchement du réglage d'un paramètre, peut comprendre une étape d'émission d'un signal sonore et/ou lumineux par des moyens d'émission de signal 91.

Plus généralement, le déclenchement du réglage d'un paramètre, et donc la délivrance de l'instruction de commande correspondant à un déclenchement du réglage d'un paramètre, peut comprendre une étape d'émission d'un signal sonore et/ou visuel par les moyens d'émission de signal.

Suite à la délivrance de l'instruction de commande correspondant au réglage d'un paramètre, si le geste détecté comprend une deuxième partie P2" de geste détecté consistant en un rapprochement vers l'interface homme-machine 90 jusqu'à une distance normale à l'interface homme-machine 90 comprise entre 150mm et 350mm ou un écartement de l'interface homme-machine 90 jusqu'à une distance normale à l'interface homme-machine 90 comprise entre 150mm et 350mm, une instruction de commande correspondant à un choix de niveau de réglage du paramètre est délivrée.

Durant cette phase, le dispositif d'affichage et/ou de saisie 92 pour un utilisateur peut permettre de visualiser en temps réel la valeur du paramètre en cours de réglage.

Le dispositif d'affichage et/ou de saisie 92 pour un utilisateur peut également permettre de visualiser en temps réel l'atteinte du niveau de réglage souhaitée par un utilisateur si celui-ci l'a saisi au préalable.

Suite à la délivrance de l'instruction de commande correspondant à un choix de niveau de réglage du paramètre, si le geste détecté comprend une troisième partie P3" de geste détecté dans laquelle la au moins une main d'un utilisateur se rapproche ou s'écarte de l'interface homme-machine 90 d'une distance normale à l'interface homme-machine 90 qui est inférieure ou égale à 5mm en un temps sensiblement égal à 500ms, l'instruction de commande correspond à une fin de réglage du paramètre.

Le fait d'atteindre la fin de réglage du paramètre correspond également à une validation de la valeur du paramètre réglé.

Il est à noter que si les trois parties ne sont pas toutes exécutées, ou intégralement exécutées, par exemple du fait que l'utilisateur retire sa main de la zone de détection préalablement à la finalisation de la troisième partie P3", le réglage du paramètre n'est pas finalisé ni validé et le paramètre revient à sa valeur préalable à l'entrée dans le mode de réglage.

Selon le type d'appareil électroménager, les paramètres à régler peuvent être multiples. Notamment, le paramètre peut appartenir au groupe comprenant :
une puissance de chauffage ;
un mode de cuisson ;
une sélection d'un foyer de cuisson ;
un temps de cuisson ;
un programme de lavage ;
un programme de séchage ;
un programme de maintenance ; et
un réglage de paramètre d'information système.

Selon une variante d'un mode de réalisation d'un geste à détecter pour délivrer une instruction de commande correspondant à un réglage de paramètre, suite à la délivrance de l'instruction de commande correspondant à un choix de niveau de réglage du paramètre, si la main de l'utilisateur s'est rapprochée vers l'interface homme-machine ou s'est écartée de l'interface homme-machine d'une distance normale à l'interface homme-machine supérieure ou égale à 15mm durant la deuxième partie de geste détecté, et si le geste détecté comprend une troisième partie de geste détecté dans laquelle la au moins une main d'un utilisateur se rapproche ou s'écarte de l'interface homme-machine d'une distance normale à l'interface homme-machine qui est inférieure ou égale à 5mm en un temps sensiblement égal à 500ms, l'instruction de commande correspond à une fin de réglage du paramètre.

Les gestes effectués par au moins une main d'un utilisateur détaillés ci-dessus et donnant lieu à la délivrance d'instructions de commande de l'appareil électroménager ne sont que des exemples de réalisation de gestes effectués par au moins une main d'un utilisateur et aboutissant à la délivrance d'une instruction de commande de l'appareil électroménager correspondant à la séquence prédéterminée.

Par exemple, on pourrait prévoir des séquences prédéterminées comprenant des mouvements prédéterminés curvilignes à réaliser à une altitude constante par rapport à l'interface homme-machine.

Par exemple, on pourrait prévoir des séquences prédéterminées comprenant des mouvements prédéterminés à réaliser avec les deux mains.

## Revendications

1. Procédé (100) de commande d'un appareil électroménager (9) par le biais d'une interface homme-machine (90) adaptée à commander ledit appareil électroménager (9) en réponse à un geste effectué par au moins une main d'un utilisateur,
ledit procédé comprenant les étapes suivantes :
- détection (101) d'un geste effectué par ladite au moins une main, ledit geste étant composé d'au moins un mouvement effectué en au moins un temps donné ;
- si ledit geste détecté est effectué dans une zone de détection prédéfinie (8) située à distance de ladite interface homme-machine (90), comparaison (102) dudit geste détecté avec un ensemble de séquences prédéterminées, chacune desdites séquences prédéterminées comprenant au moins un mouvement prédéterminé à réaliser dans un laps de temps prédéterminé, chacune desdites séquences prédéterminées correspondant respectivement à une instruction de commande dudit appareil électroménager (9) ; et
- si ledit geste détecté correspond à une desdites séquences prédéterminées, délivrance (103) d'une instruction de commande dudit appareil électroménager correspondant respectivement à ladite séquence prédéterminée,
ladite zone de détection prédéfinie (8) présentant une forme pyramidale s'étendant entre un sommet (80) porté par ladite interface homme-machine (90) et une base (81) située à une distance normale audit sommet (80) comprise entre 30 et 70 cm, préférentiellement 50 cm, ladite base (81) s'étendant sur une longueur comprise entre 20cm et 40cm, préférentiellement 30cm, ladite base (81) s'étendant sur une largueur comprise entre 20cm et 40cm, préférentiellement 30cm, ladite base (81) étant centrée sur une normale (N) à ladite interface homme machine (90).

2. Procédé de commande selon la revendication 1, **caractérisé en ce que** si ledit geste détecté comprend :
- une première partie (P1) de geste détecté dans laquelle le mouvement consiste en un rapprochement vers ladite interface homme-machine (90) depuis une distance normale à ladite interface homme-machine (90) supérieure à 200mm jusqu'à une distance normale à ladite interface homme-machine (90) comprise entre 8mm et 200mm, puis
- une deuxième partie (P2) de geste détecté dans laquelle le mouvement consiste en un écartement de ladite interface homme-machine (90) jusqu'à une distance normale à ladite interface homme-machine (90) maximale inférieure à 200mm en un temps compris entre 50ms et 750ms, puis
- une troisième partie (P3) de geste détecté dans laquelle ledit mouvement consiste en un rapprochement vers ladite interface homme-machine (90) jusqu'à une distance normale à ladite interface homme-machine (90) minimale supérieure à 8mm en un temps compris entre 50ms et 750ms, puis
- une quatrième partie (P4) de geste détecté dans laquelle le mouvement consiste en un écartement de ladite interface homme-machine (90) d'une distance normale à ladite interface homme-machine (90) depuis une distance comprise entre 8mm et 200mm jusqu'à une distance normale à ladite interface homme-machine (90) supérieure à 200mm,
alors ladite instruction de commande correspond à une sélection et/ou une activation et/ou une demande de réglage.

3. Procédé de commande selon la revendication 1, **caractérisé en ce que** si ledit geste détecté comprend :
- une première partie de rapprochement vers l'interface homme-machine jusqu'à une position basse située dans la zone de détection prédéfinie ;
- une deuxième partie d'écartement de l'interface homme-machine jusqu'à une position haute, sans sortir de la zone de détection prédéfinie, d'une distance par rapport à cette position basse et normale à l'interface homme-machine comprise entre 8mm et 200mm en un temps compris entre 50ms et 750ms ;
- une troisième partie de rapprochement vers l'interface homme-machine depuis la position haute, d'une distance par rapport à cette position haute et normale à l'interface homme-machine comprise entre 8mm et 200mm en un temps compris entre 50ms et 750ms ;
- une quatrième partie d'écartement de l'interface homme-machine,
alors ladite instruction de commande correspond à une sélection et/ou une activation et/ou une demande de réglage.

4. Procédé de commande selon l'une des revendications précédentes, **caractérisé en ce que** si le geste détecté comprend un mouvement continu consistant en un déplacement continu depuis un niveau haut situé à une distance normale de 350mm par rapport à l'interface homme-machine 90 jusqu'à un niveau bas situé à 150mm de l'interface homme-machine 90, et ce en un temps inférieur à 400ms, alors ladite instruction de commande correspond à une fonction d'urgence dudit appareil électroménager.

5. Procédé de commande selon l'une des revendications précédentes, **caractérisé en ce que** si ledit geste détecté comprend :
- une première partie (P1') de geste détecté dans laquelle le mouvement consiste en un rapprochement vers ladite interface homme-machine (90) depuis une distance normale à ladite interface homme-machine (90) supérieure à 350mm jusqu'à une distance normale à ladite interface homme-machine (90) inférieure à 350mm, et ce en un temps inférieur à 500ms, puis
- une deuxième partie (P2') de geste dans laquelle le mouvement consiste en un rapprochement continu vers ladite interface homme-machine (90) jusqu'à une distance normale à ladite interface homme-machine (90) inférieure ou égale à 150mm, et ce en un temps inférieur à 400ms,
alors ladite instruction de commande correspond à une fonction d'urgence dudit appareil électroménager.

6. Procédé de commande selon l'une des revendications précédentes, **caractérisé en ce que** si ledit geste détecté comprend une première partie (P1") de geste détecté dans laquelle ladite au moins une main d'un utilisateur est immobile pendant une durée sensiblement égale à 500ms et est situé à une distance normale à ladite interface homme-machine (90) comprise entre 150mm et 350mm, ladite instruction de commande correspond au déclenchement du réglage d'un paramètre,
et **en ce que**, suite à la délivrance de ladite instruction de commande correspondant au réglage d'un paramètre, si ledit geste détecté comprend une deuxième partie (P2") de geste détecté consistant en un rapprochement vers ladite interface homme-machine (90) jusqu'à une distance normale à ladite interface homme-machine (90) comprise entre 150mm et 350mm ou un écartement de ladite interface homme-machine (90) jusqu'à une distance normale à ladite interface homme-machine (90) comprise entre 150mm et 350mm, ladite instruction de commande correspond à un choix de niveau de réglage dudit paramètre,
et **en ce que**, suite à la délivrance de ladite instruction de commande correspondant à un choix de niveau de réglage dudit paramètre, si ledit geste détecté comprend une troisième partie (P3") de geste détecté dans laquelle ladite au moins une main d'un utilisateur se rapproche ou s'écarte de ladite interface homme-machine (90) d'une distance normale à ladite interface homme-machine (90) qui est inférieure ou égale à 5mm en un temps sensiblement égal à 500ms, ladite instruction de commande correspond à une fin de réglage du paramètre.

7. Procédé de commande selon la revendication précédente, **caractérisé en ce que** le déclenchement du réglage d'un paramètre peut comprendre une étape d'émission d'un signal sonore et/ou lumineux par des moyens d'émission de signal (91).

8. Procédé de commande selon l'une des revendications 6 ou 7, **caractérisé en ce que** le paramètre appartient au groupe comprenant :
- une puissance de chauffage ;
- un mode de cuisson ;
- une sélection d'un foyer de cuisson ;
- un temps de cuisson ;
- un programme de lavage ;
- un programme de séchage ;
- un programme de maintenance ; et
- un réglage de paramètre d'information système.

9. Interface homme-machine (90) destinée à mettre en oeuvre un procédé (100) de commande d'un appareil électroménager selon l'une des revendications 1 à 8, adaptée à commander ledit appareil électroménager (9) en réponse à un geste effectué par au moins une main d'un utilisateur, ladite interface homme-machine (90) comprenant :
- un module d'acquisition (900) muni d'un capteur temps de vol (9000) et d'un microprocesseur (9001) ;
- un module de commande (901) configuré pour délivrer ladite instruction de commande dudit appareil électroménager, et
- un module de stockage (902) de séquences prédéterminées.

10. Interface homme-machine selon la revendication précédente, **caractérisée en ce qu'**elle comprend un dispositif d'affichage et/ou de saisie (92) pour un utilisateur.

11. Appareil électroménager comprenant une interface homme-machine (90) selon l'une des revendications 9 ou 10.

12. Appareil électroménager selon la revendication 11, ledit appareil ménager appartenant au groupe comprenant :
- une table de cuisson ;
- un four ;
- un lave-linge ;
- un lave-vaisselle ;
- une hotte.
